# EUROPEAN PATENT SPECIFICATION

(11) **EP 1 125 199 B1**
(45) Date of publication and mention of the grant of the patent: **19.05.2004**
(21) Application number: 00962354.7
(22) Date of filing: 21.08.2000
(51) Int. Cl.: G06F 11/00

(54) **Method of debugging a program thread**
Verfahren zur Fehlerbeseitigung in einem Thread-Programm
Méthode de déverminage d'un ensemble d'instructions de programme

(30) Priority: 07.09.1999 US 390853
(43) Date of publication of application: 22.08.2001
(73) Proprietor: Koninklijke Philips Electronics N.V., 5621 BA Eindhoven (NL)
(72) Inventor: SAVILLE, Winthrop, L., NL-5656 AA Eindhoven (NL); ROSS, Kevin, NL-5656 AA Eindhoven (NL)
(74) Representative: de Jong, Durk Jan
(86) International application number: PCT/EP2000/008183
(87) International publication number: WO 2001/018651

(56) References cited:
- ROSENBERG, JONATHAN B.: "How debuggers work" 1996 , WILEY COMPUTER PUBLISHING , NEW YORK, USA XP002159764 ISBN: 0-471-14966-7 page 40 -page 42 page 176 -page 184

## Description

### BACKGROUND OF THE INVENTION

### 1. Field of the Invention

The invention relates to the debugging of computer programs and, in particular, to the capability of debugging multiple threads.

### 2. Description of Related Art

Many different techniques are used for facilitating the debugging of computer programs. One common technique is to stop the running of a program thread (i.e. a sequence of instructions) upon the occurrence of a predetermined event and to examine the contents of various memory locations, e.g. registers, addresses in RAM, etc. A very useful device for stopping a thread in this manner is the breakpoint.

In "How debuggers work", by Rosenberg, J.B., Wiley Computer Publishing, New York, 1996, page 40 - 42, the use of breakpoints in software debugging is described. Breakpoints are usually implemented as a special instruction that causes a trap to the operating system, which then can notify a special program that has registered itself as a debugger. Given an address in the executable code where a breakpoint needs to be set, the debugger can read the current instruction at that location and save it for later replacement. Then the debugger writes the special breakpoint instruction at that location. Now, when the execution of the debugger proceeds at full processor speed, if the processor executes one of these breakpoint instructions, a special trap occurs in the operating system without the debugger executing a single instruction past the breakpoint. Sometimes, the debugger will want to proceed past this breakpoint. In this case, the debugger.must go back to the instruction it saved earlier and replace it, have the debugger single-step this one instruction, and then replace the breakpoint instruction before allowing the debugger to again proceed at full processor speed.

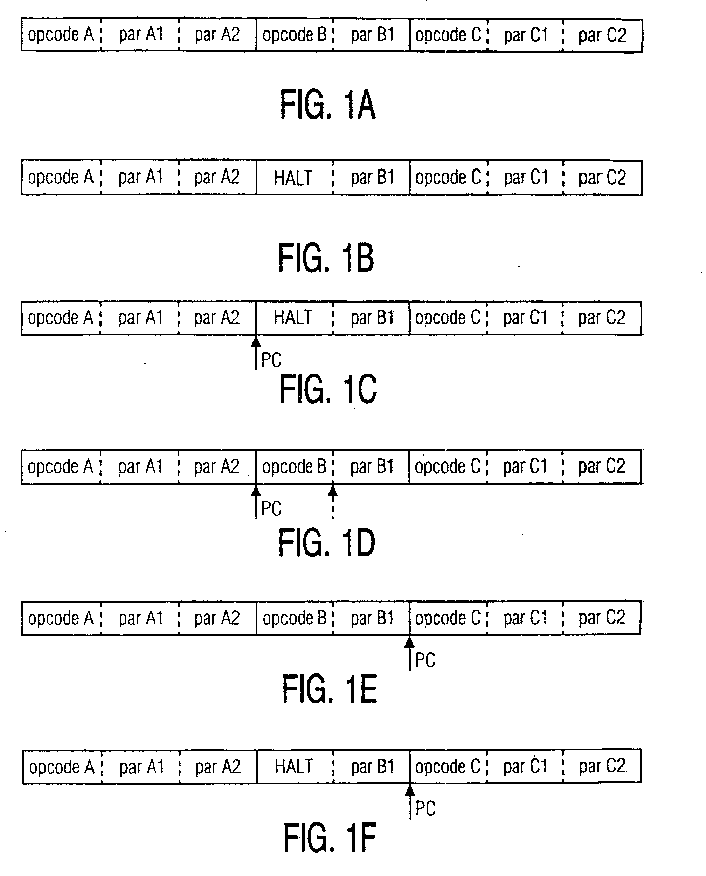

Breakpoints for stopping execution of a currently-running thread can be set to occur in a variety of ways. Examples include breakpoints that occur when a specific instruction is executed and breakpoints that occur when a specific memory location is accessed. A representative example of using a specific-instruction type of breakpoint is illustrated in Figures 1A through 1F.

Figure 1A illustrates a sequence of instructions in a thread to be debugged. Each of the instructions includes an opcode followed by any parameters (e.g. operands, addresses, data etc.) that are associated with the respective instruction. Typically, each opcode is one byte long. In this example, the sequence includes three instructions, i.e.:
Instruction A, comprising opcode A followed by two associated paramaters A1 and A2;
Instruction B, comprising opcode B followed by one associated parameter B1; and
Instruction C, comprising opcode C followed by two associated parameters C1 and C2.

Conventionally, each of these instructions is read and executed in the sequence shown under the control of a program counter in a processor.

Figure 1B shows how a breakpoint is set in the thread to be debugged. Specifically, a HALT opcode is substituted by the debugger in place of opcode B.

Figure 1C depicts the instant when the processor has executed Instruction A and has incremented the value PC in the program counter to the address where the HALT opcode is stored. At this time, the processor stops running the thread and directly or indirectly notifies the debugger that the breakpoint has been reached. This can be done in a variety of ways, e.g. by the processor activating an interrupt to the debugger or by the debugger periodically polling the state of the processor to detect that the processor has reached a HALT opcode.

As is depicted in Figure 1D, the debugger responds to notification of the HALT opcode by reading the value PC for the halted thread to determine which one (of possibly many) breakpoints has been reached. The debugger then writes the corresponding opcode (i.e. "opcode B", for which the HALT opcode had been substituted in Figure 1B) into the memory 20 and commands the processor to execute the next instruction. In executing this instruction, the processor will read the newly-written opcode B and increment the program counter to indicate the location of the associated single-byte parameter B1.

As is depicted in Figure 1E, the processor then reads the associated parameter B1 and increments the program counter to the address of opcode C. On completion of instruction B, the processor stops and the debugger regains control.

As is depicted in Figure 1F, after the processor executes Instruction B, but before it reads opcode C, the debugger re-substitutes the HALT opcode for opcode B in the program stream. This is necessary to retain the breakpoint in the thread.

From the example shown in Figure 1, it can be seen that breakpoint debugging of even a single thread can be a complicated and time consuming process.

### SUMMARY OF THE INVENTION

It is an object of the invention to provide a method of breakpoint debugging that is simpler and less time consuming than known breakpoint debugging techniques.

It is yet another object of the invention to provide a method of debugging which, in a multi-threaded software environment, facilitates debugging of one thread while allowing other threads to continue running.

In accordance with one form of the invention as defined in claim 1, a method of debugging a program thread, having a sequence of instructions to be run by a processor, includes:
substituting a breakpoint indicator for a selected part of at least one of the instructions;
saving the selected part in a predetermined memory location;
sequencing through the instructions until the breakpoint indicator is reached;
loading the selected part from memory into a dedicated register;
performing at least one of a plurality of predetermined debugging operations.

Further enhancements are provided by subclaims 2-8.

Note that the word "memory", as used herein, is intended to be interpreted as generally as is consistent with the manner in which it is used and includes volatile and nonvolatile devices of various types including, without limitation, RAMs, DRAMs, ROMs, registers and combinations of such devices. A "dedicated" memory means that the memory has one or more specific locations which are known to the processor. However, these locations need not be fixed, but may be changed under the control of the processor. Also, as used herein, the word "pointer" means any value that identifies a memory location. Additionally, "accessing" data means obtaining data from, or placing data into, a memory.

### BRIEF DESCRIPTION OF THE DRAWING

Figures 1A through 1F illustrate a known breakpoint technique.
Figure 2 is a block diagram illustrating an exemplary processing system that is useful in explaining preferred embodiments of the invention.
Figures 3A through 3E illustrate a breakpoint technique in accordance with an embodiment of the invention.

### DESCRIPTION OF THE PREFERRED EMBODIMENTS

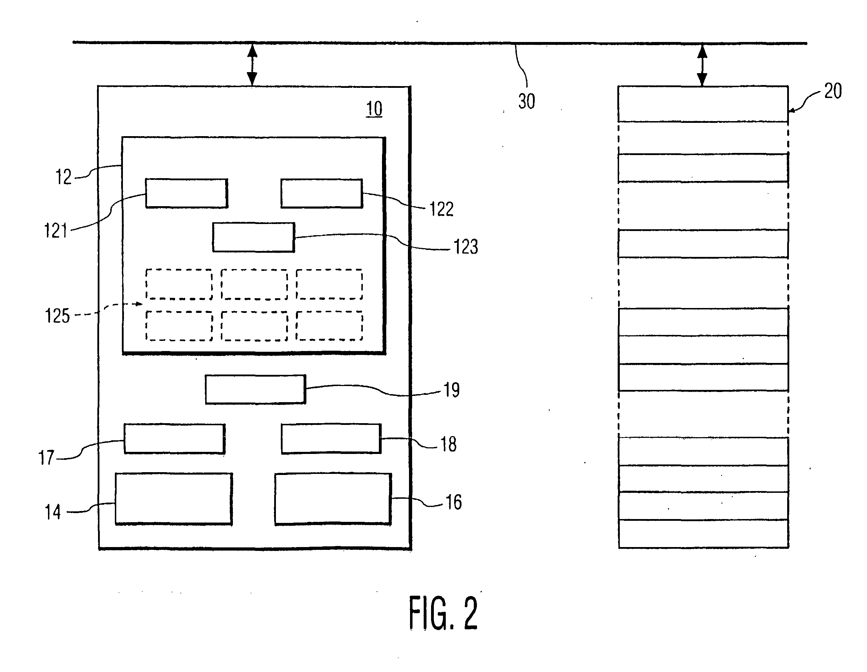

The processing system of Figure 2 includes a processor 10 and a memory 20. The exemplary processor 10 is a hardware-accelerated unit, which utilizes clock pulses to sequence through instructions identified by a program counter register. Typically, the program counter register contains the memory location of the next instruction to be read and acted upon by the processor.

The processor includes a context register set 12, an instruction decoder 14, an arithmetic logic unit 16, an SS OPCODE register 17, an SS TC PTR register 18, and a register 19 containing an OPCODE IS VALID flag. The memory 20, in this exemplary embodiment, comprises a RAM having a multiplicity of memory locations for storing, inter alia, a plurality of thread contexts.

The processor 10 and the memory 20 are connected to a common bus 30 for communicating with each other and with other hardware that is connected to the bus. The bus includes respective lines for carrying information such as addresses; interrupts, data, read strobes, write strobes and device-select strobes. Preferably, this is a high-speed bus which is at least partially formed on a common silicon substrate with the processor and the memory.

The context register set 12 comprises a plurality of registers for containing the context of the thread currently being run by the processor 10. In the preferred embodiment, the register set 12 includes:
a program counter register 121 containing a value PC which the processor continually updates to identify the address of the next instruction in the memory 20 to be accessed;
a register 122 for holding a pointer TC PTR indicating a memory address where the context for the thread currently being run by the processor is to be stored;
a register 123 for holding STATUS information associated with the thread currently being run by the processor; and
one or more additional registers 125 for holding, inter alia, additional thread-context information and data which is either read from the memory 20 or produced by the arithmetic logic unit 16.

The instruction decoder 14 is a conventional hardware component, such as a sequencer or micro-sequencer, for converting the instructions read from the memory 20 to lower-level operation codes. The arithmetic logic unit 16 is also a conventional hardware component.

The SS OPCODE register 17, the SS TC PTR register 18, and the SS OP FLAG register 19 are provided for holding information particularly relevant to breakpoint debugging. Specifically, register 17 holds an opcode from a thread that is being debugged (a debuggee thread), register 18 holds a pointer SS TC PTR associated with the debuggee thread, and register 19 holds a flag associated with register 17.

In operation, the processor runs one thread at a time (the current thread), but can be switched to any other thread by a variety of means, e.g. by an internal timer interrupt, by an external interrupt, or by an instruction in the current thread itself. As is well known in the art, this is typically done by storing the current thread context (held in context register set 12) into the memory address indicated by the pointer TC PTR contained in register 122. The processor then reads into the context register set 12 the respective context for the next thread to be run.

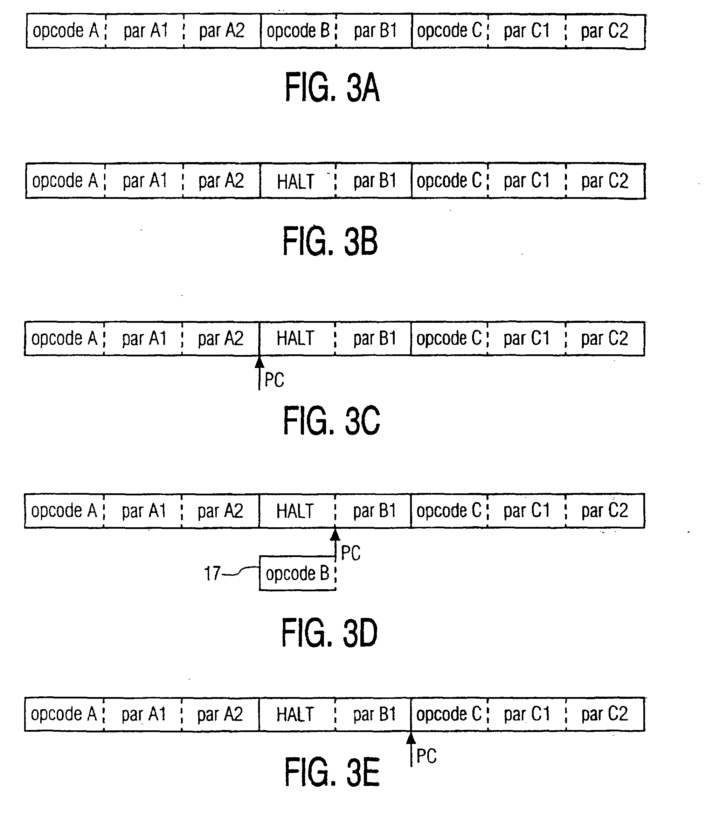

Figures 3A through 3E generally illustrate an example of breakpoint debugging in accordance with an embodiment of the invention. The same sequence of instructions that were utilized in the known technique illustrated in Figures 1A through 1F are used in this example to facilitate comparison.

Figures 3A through 3C are identical to Figures 1A through 1C. That is, Figure 3A illustrates the sequence before insertion of a breakpoint opcode; Figure 3B shows that the debugger has substituted the breakpoint opcode HALT; and Figure 3C depicts the instant when the processor has incremented the value PC in the program counter register 121 to the address where the HALT opcode is stored. At this time, the processor also stops running the thread and notifies the debugger that the breakpoint has been reached.

As is depicted in Figure 3D, the debugger responds to notification of the HALT opcode by reading the value PC for the halted thread. Rather than writing opcode B (for which the HALT opcode had been substituted) over the HALT opcode, however, the processor writes opcode B into the SS OPCODE register 17, leaving the HALT opcode in the thread, and sets the OPCODE IS VALID flag. The processor then increments the program counter to indicate the location of the associated single-byte parameter B1.

As is depicted in Figure 3E, the processor reads the associated parameter B1, increments the program counter to the address of opcode C, and executes the just-read instruction B.

All of the steps which would have been needed to re-substitute the HALT opcode for opcode B are thus eliminated. This typically includes halting the processor on completion of instruction B, over-writing opcode B with the HALT opcode, and then resuming running of the stopped thread or a different thread.

The specific manner in which breakpoint debugging is carried out will depend on the options provided to the debugger and the number of threads that the processor is running. In accordance with a preferred embodiment of the invention, the debugger is provided with the following options, all of which are available regardless of whether one or more threads is running:
stop a running thread;
single-step from a breakpoint or from a point other than a breakpoint;
resume running from a breakpoint or from a point other than a breakpoint.

In order to facilitate these options, flags and commands are provided for use by the debugger and the processor, including:
a RUNNING flag, contained in the STATUS information for each thread, which indicates whether the respective thread is running or stopped;
an OPCODE IS VALID flag, contained in register 19 which:
   when set, indicates that an opcode awaiting execution has been loaded into the SS OPCODE register 17;
   when reset, indicates that the next instruction should be taken from the program stream;
   a SINGLE-STEP command, which will cause the processor to execute the next instruction only in a stopped thread;
   a RESUME command, which will cause the processor to resume running of a stopped thread.

If more than one thread is running, each thread being debugged will stop upon the occurrence of a HALT opcode and the RUNNING flag for that thread will be reset. The processor will continue to alternately process all threads, but each time it accesses the context for a stopped thread it will detect the reset state of the RUNNING flag in that thread's context and then do nothing until an interrupt occurs, causing the processor to switch to the next thread in sequence.

The debugger may be debugging one or more threads, each having one or more breakpoints set. To respond to the occurrence of a HALT at a breakpoint, the debugger must be able to locate the opcode for which the HALT opcode was substituted. Preferably the debugger does this by having the processor notify it of the thread context address for the thread which processed the HALT instruction or by accessing the status register in the thread context for each debuggee thread to sense the state of the RUNNING flags. Note that a reset, i.e. stopped, state may exist for more than one debuggee thread at a time.

### Stop a Running Thread

The debugger may choose to stop any thread which is running. To do this, the debugger will instruct the processor to load the SS TC PTR register 18 with a pointer identifying the memory location holding the context for the running debuggee thread. The debugger will then issue the HALT command, causing the processor to:
save the context of any currently-running thread in the memory address indicated by the pointer TC PTR which is currently in register 122;
copy the contents of register 122 into register 18 (to facilitate later re-installation of the just-running thread) and copy the contents of register 18 (the pointer SS TC PTR) into register 122;
read into the context register set 12 the debuggee context located at the memory address identified by the pointer SS TC PTR (now in register 122);
reset the RUNNING flag;
save in memory the current context for the debuggee thread that has just been stopped;
copy the contents of register 18 into register 122, to effect re-installation of the previously-running thread;
read into the context register set 12 the thread context located at the memory address identified by the pointer TC PTR in register 122.

Note that the saved context in the debuggee thread has the RUNNING flag reset. Thus the processor continues to cycle through all of the threads it is processing, but each time it reaches the context of the debuggee thread it notes that the RUNNING flag in the STATUS information is still reset and does not run the debuggee thread.

### Single-step

The debugger may choose to single step any thread which is stopped. To do this, the debugger will instruct the processor to load the SS TC PTR register 18 with a pointer identifying the memory location holding the context for the stopped debuggee thread. The debugger will then read the program counter for the debuggee thread to determine whether it was stopped at a breakpoint. If at a breakpoint, it will load into the SS OPCODE register 17 the opcode for which the HALT opcode had been substituted (e.g. opcode B in Fig. 3D) and will set the OPCODE IS VALID flag. If not at a breakpoint, the OPCODE IS VALID flag will have already been reset.

The debugger will then issue the SINGLE-STEP command, causing the processor to:
save the context of any currently-running thread in the memory address indicated by the pointer TC PTR which is currently in register 122;
copy the contents of register 122 into register 18 (to facilitate later re-installation of the just-running thread) and copy the contents of register 18 (the pointer SS TC PTR) into register 122;
read into the context register set 12 the debugee context located at the memory address identified by the pointer SS TC PTR (now in register 122), which context includes the value PC for the breakpoint at which the HALT opcode resides;
examine the OPCODE IS VALID flag to determine the source of the opcode to be used, i.e. from register 17 if the flag is set or from the program stream if the flag is reset;
reset the OPCODE IS VALID flag to indicate that no opcode awaiting execution is in register 17;
increment the value PC in register 121 (e.g. to the address of parameter B1 in Fig. 3D);
read the parameter(s), if any, at the incremented value PC (e.g. the parameter B1);
repeat the last two steps as necessary to read any additional parameter(s) associated with the opcode read from register 17;
execute the complete instruction formed from the just-read opcode, and any parameter(s) associated with it, and then increment the value PC to the next opcode (e.g. opcode C in Figure 3E);
save in memory the current context for the debuggee thread that has just been single stepped;
copy the contents of register 18 into register 122, to effect re-installation of the previously-running thread;
read into the context register set 12 the thread context located at the memory address identified by the pointer TC PTR in register 122.

Note that the saved context includes the value PC for the next instruction to be executed in the debuggee thread and the RUNNING flag, which is still reset. Thus the processor continues to cycle through all of the threads it is processing, but each time it reaches the context of the debuggee thread it notes that the RUNNING flag in the STATUS information is still reset and does not run the debuggee thread.

### Resume Running

The debugger may choose to resume the running of any thread which is stopped. To do this, the debugger will instruct the processor to load the SS TC PTR register 18 with a pointer identifying the memory location holding the context for the stopped debuggee thread.

The debugger will then read the program counter for the debuggee thread to determine whether it was stopped at a breakpoint.

If at a breakpoint, it will load into the SS OPCODE register 17 the opcode for which the HALT opcode had been substituted (e.g. opcode B in Fig. 3D) and will set the OPCODE IS VALID flag.

The debugger will then issue the RESUME command, causing the processor to:
save the context of any currently-running thread in the memory address indicated by the pointer TC PTR which is currently in register 122;
copy the contents of register 122 into register 18 (to facilitate later re-installation of the just-running thread) and copy the contents of register 18 (the pointer SS TC PTR) into register 122;
read into the context register set the debuggee context located at the memory address identified by the pointer SS TC PTR (now in register 122), which context includes the value PC for the breakpoint at which the HALT opcode resides;
examine the OPCODE IS VALID flag to determine the source of the opcode to be used, i.e. from register 17 if the flag is set or from the program stream if the flag is reset;
reset the OPCODE IS VALID flag to indicate that no opcode awaiting execution is in register 17;
increment the value PC in register 121 (e.g. to the address of parameter B1 in Fig. 3D);
read any parameter(s) at the incremented value PC (e.g. the parameter B1);
repeat the last two steps as necessary to read any additional parameter(s) associated with the opcode read from register 17;
set the RUNNING flag in the STATUS information contained in register 123;
execute the complete instruction formed from the just-read opcode, and any parameter(s) associated with it, and then increment the value PC to the next opcode (e.g. opcode C in Figure 3E);
save in memory the current context for the debuggee thread;
copy the contents of register 18 into register 122, to effect re-installation of the previously-running thread;
read into the context register set 12 the thread context located at the memory address identified by the pointer TC PTR in register 122.

Alternatively, if not at a breakpoint, the OPCODE IS VALID flag will have already been reset. The debugger will then issue the RESUME command causing the processor to:
save the context of any currently-running thread in the memory address indicated by the pointer TC PTR which is currently in register 122;
copy the contents of register 122 into register 18 (to faciliate later re-installation of the just-running thread) and copy the contents of register 18 (the pointer SS TC PTR) into register 122;
read into the context register set the debuggee context located at the memory address identified by the pointer SS TC PTR (now in register 122), which context includes the value PC for the next opcode in the thread;
set the RUNNING flag in the STATUS information contained in register 123;
save in memory the current context for the debuggee thread;
copy the contents of register 18 into register 122, to effect re-installation of the previously-running thread;
read into the context register set 12 the thread context located at the memory address identified by the pointer TC PTR in register 122.

Note that the saved context includes the value PC for the next instruction to be executed in the debuggee thread and the RUNNING flag (which is now set). Thus the processor continues to cycle through all of the threads it is processing, and each time it reaches the context of the debuggee thread it notes that the RUNNING flag in the STATUS information is set and runs the debuggee thread.

## Claims

1. A method of debugging a program thread comprising a sequence of instructions to be run by a processor (10), said method comprising:
a. substituting a breakpoint indicator (HALT) for a selected part (opcode B) of at least one of the instructions;
b. saving the selected part (opcode B)in memory;
c. sequencing through the instructions until the breakpoint indicator (HALT) is reached;
d. loading the selected part (opcode B) from memory into a dedicated register (17);
e. performing at least one of a plurality of predetermined debugging operations.

2. A method as in claim 1 where the selected part is saved in and loaded from the dedicated register (17).

3. A method as in claim 1 where the selected part comprises an opcode.

4. A method as in claim 1 where the selected part comprises a HALT opcode for stopping running of the thread.

5. A method as in claim 1 where the predetermined debugging operations include:
a. halting the running of the program thread at the breakpoint;
b. single-stepping a halted thread;
c. resuming running of a halted thread.

6. A method as in claim 1 where a flag is provided to indicate whether the selected part has been read into the dedicated memory and is awaiting utilization.

7. A method of debugging a program thread as in claim 1, wherein the program thread is one of a plurality of program threads capable of being run by a processor, and wherein said method further comprises:
- providing a running status indicator in a respective context for each of said threads;
- running each thread for which the status indicator is in first state;
- not running each thread for which the status indicator is in a second state.

8. A method as in claim 7 where a debugger utilizes the running status indicator to select a thread for debugging while allowing at least one other thread to continue running.

## Patentansprüche

1. Verfahren zur Austestung eines Programm-Threads mit einer, von einem Prozessor auszuführenden Befehlsfolge, welches vorsieht:
a) Einsetzen eines Haltepunktindikators (HALT) für einen ausgewählten Teil (Op-Code B) von zumindest einem der Befehle;
b) Speicherung des ausgewählten Teils (Op-Code B) in einem Speicher;
c) Durchlaufen der Befehle, bis der Haltepunktindikator (HALT) erreicht ist;
d) Laden des ausgewählten Teils (Op-Code B) von dem Speicher in ein dediziertes Register (17);
e) Ausführung von mindestens einer von mehreren vorgegebenen Austestungsoperationen.

2. Verfahren nach Anspruch 1, wobei der ausgewählte Teil in dem dedizierten Register (17) gespeichert und von diesem abgerufen wird.

3. Verfahren nach Anspruch 1, wobei der ausgewählte Teil einen Op-Code aufweist.

4. Verfahren nach Anspruch 1, wobei der ausgewählte Teil einen Op-Code HALT aufweist, um die Durchführung des Threads zu unterbrechen.

5. Verfahren nach Anspruch 1, wonach bei den vorgegebenen Austestungsoperationen
a) die Durchführung des Programm-Threads an dem Haltepunkt unterbrochen wird;
b) bei einem unterbrochenen Thread in Einzelschritten vorgegangen wird;
c) die Durchführung eines unterbrochenen Threads wieder aufgenommen wird.

6. Verfahren nach Anspruch 1, wobei ein Flag vorgesehen ist, um anzugeben, ob der ausgewählte Teil in den dedizierten Speicher eingelesen wurde und auf die Anwendung wartet.

7. Verfahren zur Austestung eines Programm-Threads nach Anspruch 1, wobei der Programm-Thread einer von mehreren Programm-Threads ist, welche von einem Prozessor ausgeführt werden können, und wobei nach dem Verfahren weiterhin
- ein Ausführungsstatusindikator in einem jeweiligen Kontext für jeden der Threads vorgesehen ist;
- jeder Thread, bei welchem sich der Statusindikator in einem ersten Zustand befindet, ausgeführt wird;
- jeder Thread, bei welchem sich der Statusindikator in einem zweiten Zustand befindet, nicht ausgeführt wird.

8. Verfahren nach Anspruch 7, wobei ein Diagnoseprogramm den Ausführungsstatusindikator einsetzt, um einen Thread zur Austestung auszuwählen, während mindestens ein weiterer Thread weiterhin ausgeführt werden kann.

## Revendications

1. Procédé de débogage d'une unité d'exécution de programme, comprenant une séquence d'instructions à exécuter par un processeur (10), ledit procédé comprenant :
a. le remplacement d'une partie sélectionnée (code opération B) d'au moins une des instructions par un indicateur de point d'arrêt (HALTE);
b. la sauvegarde de la partie sélectionnée (code opération B) en mémoire;
c. le séquencement des instructions jusqu'à ce que l'indicateur de point d'arrêt (HALTE) soit atteint;
d. le chargement de la partie sélectionnée (code opération B) à partir de la mémoire dans un registre spécialisé (17), et
e. l'exécution d'au moins l'une d'une pluralité d'opérations de débogage prédéterminées.

2. Procédé suivant la revendication 1, dans lequel la partie sélectionnée est sauvegardée dans le registre spécialisé (17) et est chargée à partir de celui-ci.

3. Procédé suivant la revendication 1, dans lequel la partie sélectionnée comprend un code opération.

4. Procédé suivant la revendication 1, dans lequel la partie sélectionnée comprend un code opération HALTE pour arrêter l'exécution de l'unité d'exécution..

5. Procédé suivant la revendication 1, dans lequel les opérations de débogage prédéterminées comprennent :
a. l'arrêt de l'exécution de l'unité d'exécution de programme au niveau du point d'arrêt;
b. la traitement pas à pas d'une unité d'exécution arrêtée, et
c. la reprise de l'exécution d'une unité d'exécution arrêtée.

6. Procédé suivant la revendication 1, dans lequel un drapeau est prévu pour indiquer si la partie sélectionnée a été lue dans la mémoire spécialisée et si elle est en attente d'utilisation.

7. Procédé de débogage d'une unité d'exécution de programme suivant la revendication 1, dans lequel l'unité d'exécution de programme est l'une d'une pluralité d'unités d'exécution de programme en mesure d'être exécutées par un processeur, ledit procédé comprenant en outre les étapes suivantes:
fournir un indicateur d'état d'exécution dans un contexte respectif pour chacune desdites unités d'exécution;
exécuter chaque unité d'exécution pour laquelle l'indicateur d'état se trouve dans un premier état, et
ne pas exécuter chaque unité d'exécution pour laquelle l'indicateur d'état se trouve dans un second état.

8. Procédé suivant la revendication 7, dans lequel un débogueur utilise l'indicateur d'état d'exécution pour sélectionner une unité d'exécution pour le débogage tout en permettant à au moins une autre unité d'exécution de poursuivre son exécution.
